# EUROPÄISCHE PATENTANMELDUNG

(11) **EP 2 463 539 A2**
(43) Veröffentlichungstag der Anmeldung: **13.06.2012**
(21) Anmeldenummer: 11188521.6
(22) Anmeldetag: 10.11.2011
(51) Int. Cl.: F16D 13/64

(54) **Belagfeder für eine Kupplungsscheibe einer Reibungskupplung**

(30) Priorität: 07.12.2010 DE 102010062492
(71) Anmelder: ZF Friedrichshafen AG, 88038 Friedrichshafen (DE)
(72) Erfinder: Ament, Norbert, 97714 Oerlenbach (DE)

(57) **Zusammenfassung**

Offenbart wird eine Belagfeder (6) für eine Kupplungsscheibe (1) einer Reibungskupplung, wobei die Belagfeder (6) derart ausgebildet ist, dass sich die Federkraft der Belagfeder (6) zumindest in einem Teilbereich der Belagfeder (6) von radial innen nach radial außen ändert.

## Beschreibung

Vorliegende Erfindung betrifft eine Belagfeder für eine Kupplungsscheibe einer Reibungskupplung, sowie eine Kupplungsscheibe mit einer derartigen Belagfeder, und eine Reibungskupplung für ein Kraftfahrzeug mit einer derartigen Kupplungsscheibe gemäß den Oberbegriffen der unabhängigen Ansprüche.

Aus dem Stand der Technik ist eine Reihe von Belagfedern bekannt, die dazu verwendet werden, die Reibbeläge einer Kupplungsscheibe einer Reibungskupplung zu tragen. Die Belagfedern selbst sind dazu an Trägern befestigt, die drehfest über eine Nabe mit einer Welle verbunden sind. An den Belagfedern selbst können die Reibbeläge für die Reibungskupplung beispielsweise mittels Nieten befestigt werden.

Um eine axial federnde Abstützung der Reibbeläge und damit eine gleichmä-βige Verteilung der Reibungskräfte zu erreichen, was wiederum die Einrückcharakteristik der Kupplung verbessert, sind die Belagfedern vorzugsweise mit federnd ausgebildeten Auflageflächen ausgestattet, an denen beidseits die Reibbeläge befestigbar sind. Dabei weisen die Auflagebereiche zueinander einen axialen Abstand auf, der über eine Biegezone bereitgestellt wird.

Die bekannten Belagfedern können beispielsweise aus einem gewellten Blech hergestellt sein, so dass die Reibbeläge an den "Wellenkämmen" anliegen. Es sind aber auch Belagfedern bekannt, deren Auflagebereiche als plane - also ebene - Auflagebereiche ausgebildet sind. Gemein ist allen bekannten Belagfedern, dass die Biegezonen bzw. Auflagezonen als zueinander parallele Elemente ausgebildet sind.

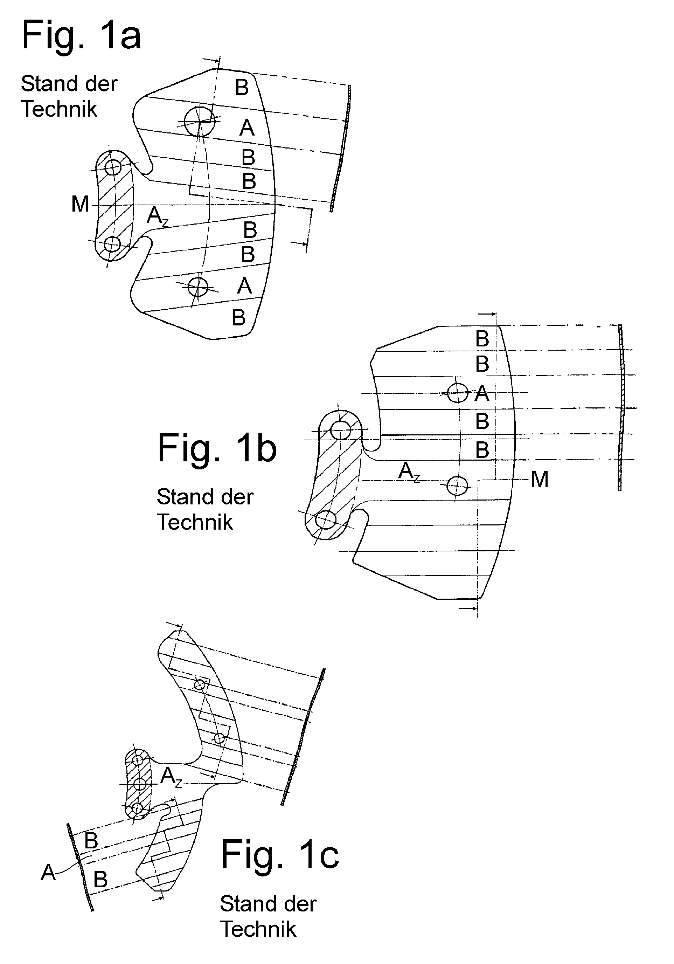

In den Figuren 1 a bis 1 c sind unterschiedliche bekannte Belagfedern dargestellt, wobei die Biegezonen B bzw. Auflagebereiche A zueinander parallel ausgebildet sind. Dies bedeutet jedoch nicht, dass die Biegezonen B und Auflagebereiche A sich in gleichmäßiger Form über die gesamte Belagfederfläche erstrecken (siehe Fig. 1 b), sondern es ist auch möglich, dass die Biegezonen B und Auflagebereiche A sich achssymmetrisch um eine gedachte radiale Belagfedermittellinie M gruppieren, so dass ein zentraler Auflagebereich Az konisch ausgebildet ist (siehe Fig. 1a, und 1 c). Eine derartige Ausbildung der Belagfedern ist beispielsweise in der DE 10 2007 054 784 beschrieben. Dabei soll der gegenläufige Verlauf der Biegezonen B beidseits der Belagfedermittellinie M verhindern, dass bei hohen Belastungen sich der Reibbelag der Belagfederkontur nachformt, wodurch ein höherer Verschleiß des Reibbelags an den hochgelegenen Bereichen entstehen kann.

Nachteilig an diesem Stand der Technik ist jedoch, dass über die radiale Ausdehnung der Belagfeder kein Einfluss auf die Kraftverteilung von Belagfeder auf Reibbelag genommen werden kann, wodurch insbesondere bei Verschleiß und/oder hohen Drehmomenten die Übertragungssicherheit nicht oder nur schlecht gewährleistet sein kann.

Zudem können bei hoher Belastung und hohen Temperaturen Verformungen am Trägerblech bzw. den Belagfedern auftreten - so genanntes Aufschirmen, welches ebenfalls die Übertragungssicherheit negativ beeinflusst.

Aufgabe vorliegender Erfindung ist es deshalb, ein Belagfederkonzept zu schaffen, bei dem ohne Bauraummehrbedarf und ohne Zusatzkosten eine Beeinflussung der radialen Kraftverteilung auf bzw. über den Reibbelag und/oder eine Beeinflussung der axialen Formveränderung der Belagfeder bei hoher Belastung und/oder hoher Temperatur möglich sein.

Diese Aufgaben werden durch eine Belagfeder gemäß Patentanspruch 1, sowie eine Kupplungsscheibe gemäß Patentanspruch 18 und eine Reibungskupplung gemäß Patentanspruch 21 gelöst.

Die Erfindung basiert auf der Idee die von der Belagfeder bereitgestellt Federkraft radial unterschiedlich zu gestalten, so dass die Belagfeder radial innen eine andere Federkraft aufweist als radial außen. Ist dabei beispielsweise die Belagfeder radial außen härter eingestellt als radial innen, kann die Übertragungssicherheit positiv beeinflusst werden. Ist die Belagfeder dagegen radial innen härter ausgebildet, kann damit einem Aufschirmen entgegengewirkt werden.

Eine unterschiedliche radial verteilte Federkraft kann einerseits dadurch erreicht werden, dass unterschiedliche Materialien oder Materialstärken verwendet werden, es ist jedoch auch möglich, wie ein besonders bevorzugtes Ausführungsbeispiel zeigt, statt der, aus dem Stand der Technik bekannten, parallel zueinander ausgerichteten Biegezonen und Auflageflächen eine Biegezone zu schaffen, deren Biegelinien in einem Winkel zueinander verlaufen. Dadurch kann, je nach Verlauf der Biegelinien, die Belagfeder radial außen oder radial innen härter ausgebildet sein.

Allgemein gilt, dass aufgrund des winkligen Verlaufs bzw. konischen Verlaufs der Biegezonen die Belagfeder in dem Biegezonenbereich weicher ist, in der der Abstand der Biegelinien relativ groß ist, als in dem Bereich in dem der Abstand der Biegelinien zueinander relativ klein ist.

Gemäß einem weiteren bevorzugten Ausführungsbeispiel kann die erfindungsgemäße Belagfeder nicht nur eine Biegezone, sondern weitere Biegezonen aufweisen, die ebenfalls von Biegelinien gebildet sind, die in beispielsweise einem zweiten oder weiteren Winkel zueinander verlaufen. Dabei können die Winkel zueinander gleich oder verschieden ausgebildet sein.

Vorzugsweise liegen die Winkel in einem Winkelbereich von 1° bis 50°, insbesondere in einem Bereich von etwa 3° bis 30°.

Vorteilhafterweise weist die Belagfeder über ihre gesamte radiale und flächige Ausdehnung die gleiche radiale Federkraftverteilung auf. Es ist jedoch auch denkbar, dass die Biegezonen innerhalb einer einzigen Belagfeder unterschiedliche ausgebildet sind. Beispielsweise kann die Belagfeder sowohl eine Biegezone aufweisen, die radial innen härter ist, also auch eine Biegezone aufweisen, die radial außen härter ist. Dabei können z.B. die beiden unterschiedlichen Biegezonen alternierend über die Gesamtfläche der Belagfeder ausgebildet sein, es ist jedoch auch möglich, die Belagfeder entlang einer radialen gedachten Linie in zwei Teile zu teilen, wobei der eine Teil radial innen hart ausgebildet ist, während der andere Teil radial außen hart ausgebildet ist.

Gemäß einem weiteren vorteilhaften Ausführungsbeispiel erstreckt sich der erfindungsgemäße Biegezonenbereich der Belagfeder über zumindest einen Teilbereich der Belagfeder. Er kann sich jedoch auch über die gesamte Belagfeder erstrecken.

Gemäß einem weiteren Ausführungsbeispiel ist mindestens einer der Auflagebereiche als ebene Fläche ausgeführt. Statt der ebenen Fläche können jedoch auch die Belagfedern als entsprechend gewellte Biegebleche ausgebildet sein, so dass der Auflagebereich beispielsweise durch einen "Wellenkamm" gebildet ist.

Gemäß einem weiteren vorteilhaften Ausführungsbeispiel ist die Form der Belagfeder bezüglich einer gedachten radialen Belagfederlinie, die die Belagfeder in einen ersten und einen zweiten Teil teilt, symmetrisch ausgebildet, so dass die Belagfederlinie eine Belagfedermittellinie definiert. Diese radiale Belagfeder(mittel)linie kann sich beispielsweise durch einen Belagfederfuß erstreckt, so dass die Belagfeder in einen rechten und in einen linken Bereich von der Belagfedermittellinie aus gesehen aufgeteilt ist. Beide Belagfederseiten können gemäß einem weiteren vorteilhaften Ausführungsbeispiel eine symmetrische Ausbildungen der Biegebereiche und Auflagebereiche beidseits der Belagfedermittellinie aufweisen. Dabei können die Bereiche achssymmetrisch ausgebildet sein.

Statt einer symmetrischen Ausbildung kann die Belagfeder auch eine asymmetrische Form und/oder Ausbildung aufweisen. Das bedeutet beispielsweise, dass die Biegezonen und Auflagebereiche der einen Seite nicht der der anderen Seite entsprechen, und/oder die rechte Seite nicht der linken entsprechen. Insbesondere bei asymmetrischer Ausbildung kann die eine Seite der Belagfeder als radial innen hart ausgebildet sein, während die andere Seite der Belagfeder als radial außen hart ausgebildet ist.

Ein weiterer Aspekt vorliegender Erfindung betrifft eine Kupplungsscheibe für eine Reibungskupplung, insbesondere eine Reibungskupplung eines Kraftfahrzeugs mit mindestens einer Belagfeder nach einem der vorhergehenden Ansprüche. Dabei ist vorzugsweise die Kupplungsscheibe mit einem Nabenteil ausgestattet, das als Träger für die Belagfedern dient. Beidseitig der Belagfedern sind vorzugsweise die Reibbeläge angeordnet, wobei die Reibbeläge beispielsweise ringscheibenförmig ausgebildet sein können und sich mindestens eine der Biegezonen der Belagfeder innerhalb der Reibbelagkontur befindet. Ist der Träger zudem als Trägerblech ausgeführt, kann eine radial innen hart ausgeführte Belagfeder ein Aufschirmen des Trägerblechs bei hohen Drehmomenten und hohen Temperaturen verhindern.

Weiterhin ist ein Ausführungsbeispiel vorteilhaft, bei dem das nabenförmige Trägerblech als Sekundärseite eines Torsionsschwingungsdämpfers ausgebildet ist, wodurch Drehungleichförmigkeiten zwischen Antrieb und Abtrieb ausgleichbar sind.

Ein weiterer Aspekt vorliegender Erfindung betrifft eine Reibungskupplung für ein Kraftfahrzeug mit einer Kupplungsscheibe, die Belagfedern, wie oben beschrieben, aufweisen.

Ein noch weiterer Aspekt vorliegender Erfindung betrifft eine Belagfedereinheit bestehend aus mindestens zwei wie oben beschriebenen Belagfedern mit einem gemeinsamen Belagfederfuß.

Im Folgenden soll die Erfindung ohne Beschränkung der Allgemeinheit beispielhaft anhand von Figuren dargestellt sein.
Es zeigen:
- Figur 1a -: 1 c:schematische Darstellungen von aus dem Stand der Technik bekannten Belagfedern;
- Figur 2:: eine schematische Schnittansicht durch ein erstes Ausführungsbeispiel einer erfindungsgemäßen Kupplungsscheibe;
- Figur 3:: eine schematische Darstellung einer Teilaufsicht auf die in Figur 2 dargestellte Kupplungsscheibe
3a mit Reibbelag;
3b ohne Reibbelag;
- Figur 4:: eine schematische Darstellung einer erfindungsgemäßen Belagfeder in Aufsicht;
- Figur 5:: Eine schematische Schnittansicht durch die in Fig. 4 dargestellte erfindungsgemäße Belagfeder
- i.: entlang Schnittlinie |-|;
- ii.: entlang Schnittlinie ||-||;
- iii.: entlang Schnittlinie lll-lll; und
- iv.: entlang Schnittlinie IV-IV.

Gleiche bzw. gleichartige Bauelemente werden im Folgenden mit gleichlautenden Bezugszeichen gekennzeichnet.

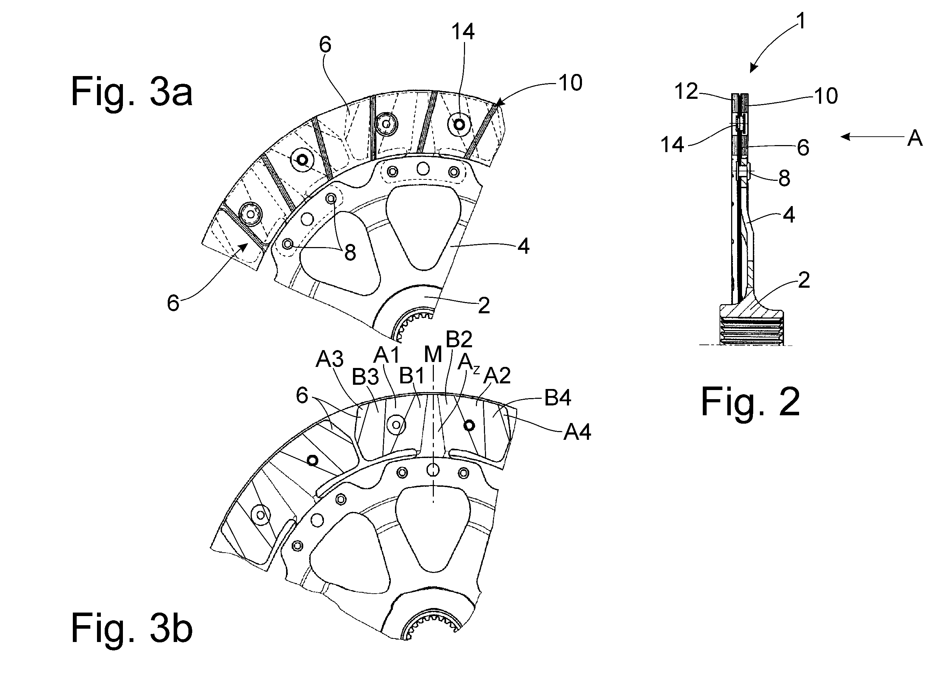

Figur 2 zeigt eine schematische Schnittansicht durch eine Kupplungsscheibe 1 einer Kraftfahrzeugreibungskupplung, die in bekannter Weise aufgebaut ist. Dabei weist die Kupplungsscheibe 1 ein Nabenteil 2 auf, der drehfest, jedoch axial verschiebbar auf einer nicht dargestellten Welle angeordnet ist. Dabei kann das Nabenteil 2 auch Bestandteil eines Torsionsschwingungsdämpfers (nicht dargestellt) sein, wobei das Nabenteil 2 vorzugsweise die Sekundärseite des Torsionsschwingungsdämpfers ausbildet. An dem Nabenteil 2 ist ein Trägerblech 4 angebracht, an dessen radial äußerem Rand ein Belagträger, nämlich insbesondere die erfindungsgemäße Belagfeder 6 mittels eines Befestigungselements 8, insbesondere einer Niet, angebracht ist. Beidseits der Belagfeder 6 sind Reibbeläge 10, 12 angeordnet, die ebenfalls mittels einer Niet 14 befestigt sein können. Statt der Befestigung mittels Niet ist es auch möglich die Reibbeläge 10, 12 auf die Belagfeder 6 aufzukleben.

Figuren 3a und 3b zeigen schematische Aufsichten auf einen Teilbereich der in Figur 2 dargestellten Kupplungsscheibe 1 in Richtung Pfeil A, wobei Fig. 3a die Kupplungsscheibe 1 mit Reibbelägen 10, 12 zeigt, während Fig. 3b die Kupplungsscheibe ohne Reibbeläge zeigt. Wie in Figur 3a dargestellt können die Reibbeläge 10, 12 ringscheibenförmig ausgebildet sein und die Belagfedern 6 derart überdecken, dass sich die Belagfedern 6 innerhalb der Reibbelagkontur befinden. Wie ebenfalls Figur 3a zu entnehmen ist, ist das Trägerblech 4 an seinem Außenumfang fest über Nieten 8 mit den Belagfedern 6, die wiederum mit den Reibbelägen 10, 12 über Nieten 14 fest verbunden sind.

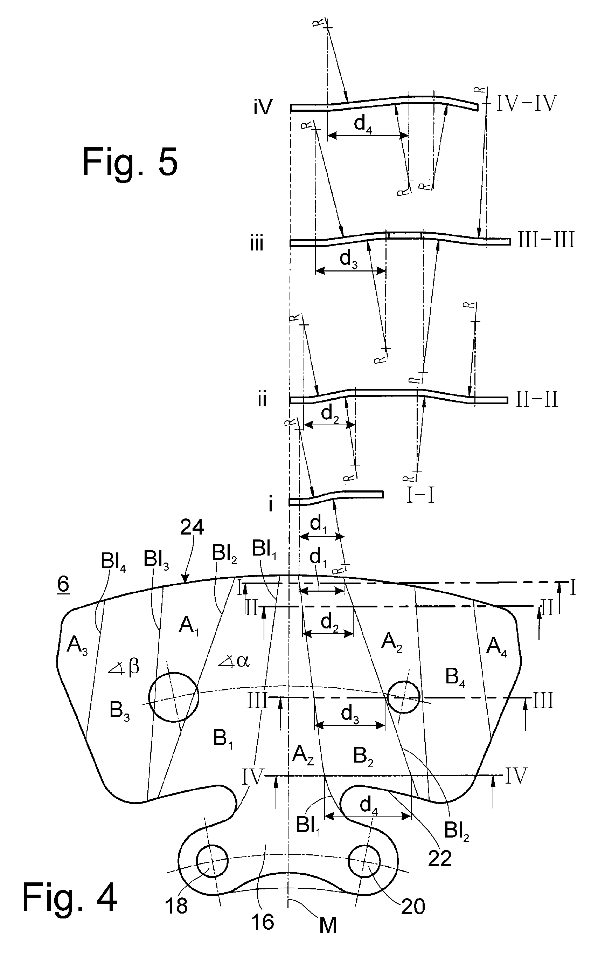

Da in der Ansicht der Figur 3b die Reibbeläge 10; 12 nicht dargestellt sind, sind die Belagfedern 6, mit ihren Biegebereichen B₁, B₂, B₃, B₄ und Auflagebereichen A₁, A₂, A₃, A₄, A_{z} deutlich zu erkennen, Die Auflagebereiche und Biegezonen werden im Detail weiter unten unter Bezugnahme auf Fig. 4 und Fig. 5 noch näher beschrieben.

Wie in Fig. 3b weiter zu erkennen, weist jede Belagfeder 6 einen zentralen Auflagebereich A_{z} auf, an den sich zwei Biegezonen B₁, B₂ anschließen. Die darauffolgenden Auflagebereiche A₁, A₂ werden wiederum von Biegebereichen B₃, B₄ begrenzt, die ihrerseits Auflagebereiche A₃, A₄, ausbilden. Wie Figur 3b ebenfalls zu entnehmen ist, sind die Biegezonen B₁ - B₄ und Auflagebereiche A₁ - A₄, achssymmetrisch zu einer radialen gedachten Belagfederlinie M ausgebildet, die im vorliegenden Fall gleichzeitig die Belagfedermittellinie darstellt. Diese Ausbildung ist jedoch rein exemplarisch. Beispielsweise kann die Belagfeder 6 auch eine asymmetrisch Form, wie beispielsweise in Fig. 1 c gezeigt, aufweisen.

Figur 4 zeigt eine vergrößerte Darstellung der Belagfeder 6 aus Figur 3a bzw. Figur 3b. Wie Figur 4 zu entnehmen ist, ist die Belagfeder 6 symmetrisch um eine Belagfedermittellinie M aufgebaut und weist radial innen einen Belagfederfuß 16 auf. Der Belagfederfuß 16 ist mit jeweils zwei Öffnungen 18, 20 ausgestattet, durch die Nieten (nicht dargestellt) zur Verbindung der Belagfeder 6 mit dem Trägerblech 4 führbar sind.

Des Weiteren weist die Belagfeder 6 einen radial außen liegenden Rand 24 und einen radial innen liegenden Rand 22 auf. Erfindungsgemäß variiert die Federkraft von dem radial inneren Rand 22 zum radial äußeren Rand 24. Dabei kann der Verlauf linear ausgebildet sein. Um eine variable Federkraft von radial innen nach radial außen zu erhalten, kann beispielsweise die Belagfeder ein unterschiedliches Material und/oder unterschiedliche Materialdicken aufweisen

Vorteilhafterweise ist aber die radiale Variation der Federkraft dadurch erreicht, dass die Belagfeder 6, wie in Fig. 3 und 4 dargestellt, konisch ausgebildete Biegezonen B₁ - B₄ aufweist, die konische Auflagebereiche A₁ - A₄, A_{z} voneinander trennen.

Wie Figur 4 weiter zu entnehmen ist, weist die Belagfeder 6 eine symmetrische Ausformung auf, so dass zum einen der zentrale Auflagebereich A_{z} entlang seiner Mittellinie M symmetrisch aufgebaut ist und auch die Auflagebereiche A₁, A₃ und die Biegebereiche B₁, B₃ den Biegebereichen B₂, B₄ und Auflagebereichen A₂, A₄ entsprechen.

Die konisch zulaufenden Biegezonen A₁, A₃, und analog A₂, A₄ werden über Biegelinien Bl₁, Bl₂ und Bl₃, Bl₄ gebildet, die in einem Winkel α, β aufeinander zulaufen. Dabei kann, wie dargestellt, der Winkel α zwischen Biegelinien Bl₁, Bl₂ und Winkel β zwischen Biegelinien Bl₃, Bl₄, verschieden sein. Es ist aber auch möglich dass die Winkel gleich ausgebildet sind.

Wie ebenfalls bereits erwähnt müssen die Biegezonen B₁, B₃ und B₂, B₄ nicht gleich ausgebildet sein. In diesem Fall würden dann weitere Winkel γ, δ für die Biegelinien existieren.

Öffnet der Biegezonenwinkel α, β, γ, δ in radialer Richtung nach innen, wie in Figur 4 dargestellt, ist die Belagfeder 6 außen härter ausgebildet als innen, wodurch sich beispielsweise die Übertragungssicherheit erhöhen kann.

Ist dagegen die Öffnung der Winkel nach radial außen gewählt, ist die Belagfeder radial innen härter ausgebildet. Wie ebenfalls oben schon erwähnt, müssen die Biegezonen einer Belagfeder nicht über die gesamte Belagfederfläche die gleiche Ausrichtung der Winkel aufweisen, sondern radial innen härtere Bereiche können gleichermaßen vorhanden sein, wie radial außen härtere Bereiche . Die Winkelabweichung zu einer parallelen Ausbildung liegt vorzugsweise im Bereich von 1 bis 50° und besonders bevorzugt im Bereich von 3 bis 30°.

Die aufgrund der konischen Ausbildung entstehende Veränderung der Abstände der Biegeradien R ist in den Schnittansichten gemäß Figur 5 i bis 5 iv dargestellt. Wie den Figuren zu entnehmen ist, vergrößert sich der Abstand d₁ bis d₄ zwischen den Biegelinien Bl₁ bzw. Bl₂ nach radial innen, so dass der innerste Abstand d₄ zwischen den beiden Biegelinien deutlich größer ist als der äußerste Abstand d1 der Biegelinien zueinander.

Dabei sollte jedoch explizit erwähnt werden, dass, auch wenn hier der Biegelinienverlauf linear dargestellt ist, ein krummliniger Biegelinienverlauf vorstellbar ist.

Da sich bei den kleinen Distanzen d₁ und d₂ die Höhenänderung über einen deutlich kleineren Bereich erstreckt, als bei den großen Distanzen d₃ bzw. d₄, ist die Federkraft in den radial äußeren Bereichen bei den kleinen Distanzen d₁ und d₂ größer als bei den großen Distanzen d₃ und d₄, so dass die Belagfeder in den Bereichen der kleinen Distanzen härter ausgebildet ist.

Bei der in den Figuren 4 und 5 dargestellten Ausführung ist, wie erwähnt, die Belagfeder außen härter ausgestaltet, was allerdings auch bedeutet, dass ihre Belastung radial außen höher ist. Um radial außen die höhere Belastung zu kompensieren, weist die Belagfeder 6 Vorteilhafterweise, aber in diesem Bereich auch größere Auflageflächen A₁, A₂ auf als innen, so dass die Belastungen pro Fläche in etwa ausgeglichen ist.

Ein weiterer Vorteil des in Figur 4 dargestellten Ausführungsbeispiels liegt darin, dass die Biegelinien Bl₁ und Bl₂ im Bereich des Fußes 16 weit voneinander entfernt liegen. Dadurch können Spannungen im Belagfederfuß 16 verringert werden, wodurch wiederum die Belastbarkeit des Belagfederfußes 16 insgesamt erhöht werden kann.

Um dagegen beispielsweise einem Schirmen der Trägerplatte 4 bei hoher Belastung bzw. hohen Temperaturen entgegenzuwirken, kann die Belagfeder 6 radial innen härter ausgebildet sein als radial außen. Dazu kann die Ausführung so gestaltet werden, dass sich die Biegezonenwinkel α, β nach radial außen öffnen, so dass sich ein gegenteiliges Bild zu Figur 4 ergibt. Dabei ist dann der äußerste Abstand d₁ der beiden Biegelinien Bl₁ und Bl₂ zueinander der größte, während sich der radial innen befindliche Abstand d₄ der Biegelinien zueinander am kleinsten ausgebildet ist.

Die radial innen härtere Ausbildung der Belagfeder kann dazu genutzt werden, beispielsweise eine Formstabilität gegen Verformung, wie sie unter anderem bei Schirmung unter Temperatur entsteht, zu erhöhen. Dies kann insbesondere von Vorteil sein, wenn die Beläge 10, 12 auf ein Belagträgerblech geklebt sind und sich diese Belagträger unter Belastung bzw. Temperatur schirmen. Mittels der innen härter ausgeführten Belagfeder kann dadurch auch einem Schirmen entgegengewirkt werden, welches zum Teil durch das Schirmen der benachbarten Bauteilkomponenten, wie beispielsweise der Anpressplatte der Druckplatte erzeugt wird.

Das Ausführungsbeispiel in Figur 4 zeigt pro Seite zwei Auflagebereiche A₁ und A₃ bzw. A₂ und A₄. Statt zwei Auflagebereiche A₁ und A₃ vorzusehen, und damit auch einen zweiten Biegebereich B₂ vorzusehen, kann die Belagfeder jedoch auch derart ausgebildet sein, dass lediglich ein einziger Biegebereich B₁ vorgesehen ist, der den zentralen Auflagebereich A_{z} und den Auflagebereich A₁ voneinander trennt. Selbstredend können auch mehr Biegezonen und Auflagebereiche als dargestellt vorhanden sein.

Des Weiteren können selbstverständlich innerhalb einer Belagfeder Biegebereiche in gleicher Richtung oder auch verschiedene Biegebereiche mit unterschiedlicher Richtung vorhanden sein. Das bedeutet beispielsweise, dass sich ein Biegebereich nach radial außen öffnet, während sich der andere Biegebereich nach radial innen öffnen kann. Des Weiteren muss die Belagfeder nicht, wie in Figur 4 dargestellt, achssymmetrisch um eine Belagfedermittellinie M ausgebildet sein, sondern es ist ebenso vorstellbar, dass die Belagfeder auf ihrer rechten bzw. linken Seite unterschiedlich ausgeformte Biege- und Auflagebereiche aufweist. Zudem muss die Belagfeder 6 auch keine bezüglich der Belagfedermittellinie M allgemeine Formsymmetrie aufweisen, sondern es können beide Seiten unterschiedlich groß lang oder sonst unterschiedlich ausgestaltet sein.

Weiterhin ist vorstellbar, dass die Biegebereiche B₁ und B₃ unterschiedliche Höhen aufweisen bzw. innerhalb eines Biegebereichs der Höhenunterschied radial innen anders ist als radial außen.

Figur 4 zeigt zudem, dass die Auflagebereiche A_{z}, A₁ und A₃ mehr oder weniger plan ausgebildet sind. Statt dieser planen Ausbildung, kann jedoch die Belagfeder beispielsweise auch ein Wellenprofil aufweisen, wobei der Auflagebereich dann als "Wellenkamm" einer Welle ausgebildet ist.

Eine weitere, nicht in Figur 4 dargestellte Ausführungsform ist dadurch gegeben, dass sich die Biegezonen bzw. Auflagezonen nicht über die gesamte radiale Ausdehnung der Belagfeder erstrecken, sondern nur einen Teilbereich umfassen. Dabei kann diese Teilbereichsausgestaltung alle aber auch nur einige oder nur einen einzelnen der Biegezonenbereiche bzw. Auflagebereiche umfassen.

Die wesentliche Neuerung an der erfindungsgemäßen Belagfeder liegt darin, dass die Federkraft der Belagfeder radial variiert, wodurch die Federkraft der Belagfeder entlang ihrer radialen Ausdehnung einstellbar ist. Dadurch kann ohne Bauraummehrbedarf Einfluss auf die radiale Kraftverteilung der Belagfeder genommen werden, so dass die Übertragungssicherheit erhöht und die Formsteifigkeit verbessert werden kann.

### Bezugszeichenliste:

- 1: Kupplungsscheibe
- 2: Nabenscheibe
- 4: Trägerblech
- 6: Belagfeder
- 8, 14: Niet
- 10, 12: Reibbelag
- 16: Belagfederfuß
- 18, 20: Öffnungen
- 22: radial innerer Rand/Bereich
- 24: radial äußerer Rand/Bereich

- A₁ - A₄, A_{z}: Auflagebereiche
- B₁ - B₄: Biegezonen
- Bl₁ - B1₄: Biegelinien
- d1 - d₄: Abstand zwischen Biegelinien
- M: Belagfeder(mittel)linie
- R: Biegeradius
- α, β, γ, δ: Winkel zwischen Biegelinien

## Patentansprüche

1. Belagfeder (6) für eine Kupplungsscheibe (1) einer Reibungskupplung, **dadurch gekennzeichnet, dass**
die Belagfeder (6) derart ausgebildet, ist, dass sich die Federkraft der Belagfeder (6) zumindest in einem Teilbereich der Belagfeder (6) von radial innen nach radial außen ändert.

2. Belagfeder nach Anspruch 1, wobei die Belagfeder (6) einen radial inneren Bereich (22) und einen radial äußeren Bereich (24) aufweist, und die Belagfeder zumindest in einem Teilbereich im radial äußeren Bereich härter ausgeführt ist, als im radial inneren Bereich.

3. Belagfeder nach Anspruch 1 oder 2, wobei die Belagfeder einen radial inneren Bereich (22) und einen radial äußeren Bereich (24) aufweist, und die Belagfeder zumindest in einem Teilbereich im radial inneren Bereich härter ausgeführt ist, als im radial äußeren Bereich.

4. Belagfeder nach einem der vorhergehenden Ansprüche, wobei die Belagfeder mindestens einen ersten und einen zweiten Auflagebereich (A₁ -A_{4,} A_{z}) aufweist, die durch mindestens eine Biegezone (B₁ - B₄) voneinander getrennt sind, so dass sie einen axialen Abstand zueinander aufweisen, wobei die Biegezone (B₁ - B₄) über eine erste Biegelinie und eine zweite Biegelinie (Bl₁ - Bl₄) gebildet ist, und die Federkraftänderung der Belagfeder dadurch bereitgestellt ist, dass die erste und die zweite Biegelinie (Bl₁ - Bl₄) in einem ersten Winkel (α, β, γ, δ) zueinander verlaufen.

5. Belagfeder nach Anspruch 4, wobei mindestens eine weitere Biegezone (B₁ - B₄) vorhanden ist, die je von zwei weiteren Biegelinien (Bl₁ - Bl₄) gebildet ist, wobei die Biegelinien vorzugsweise in einem zweiten Winkel (α, β, γ, δ) zueinander verlaufen.

6. Belagfeder nach Anspruch 5, wobei mindestens der erste und der zweite Winkel (α, β, γ, δ) unterschiedlich voneinander sind.

7. Belagfeder nach einem der Ansprüche 4 bis 6, wobei sich der Winkel (α, β, γ, δ) zwischen mindestens zwei benachbarten Biegelinien (Bl₁ - Bl₄), die eine Biegezone (B₁ - B₄) definieren, nach radial innen öffnet, wodurch vorzugsweise mindestens einer der Auflagebereiche (A₁ - A₄, A_{z}) radial außen eine größere Auflagefläche aufweist, als radial innen.

8. Belagfeder nach einem der Ansprüche 4 bis 7, wobei sich der Winkel (α, β, γ, δ) zwischen mindestens zwei benachbarten Biegelinien (Bl₁ - Bl₄), die eine Biegezone (B₁ - B₄) definieren, nach radial außen öffnet, wodurch vorzugsweise mindestens einer der Auflagebereiche (A₁ - A₄, A_{z}) radial innen eine größere Auflagefläche aufweist, als radial außen.

9. Belagfeder nach einem der Ansprüche 4 bis 8, wobei die Belagfeder weiterhin einen Belagfederfuß (16) aufweist, mit dem die Belagfeder mit einer Kupplungsscheibe (1) verbindbar ist, und im Bereich des Belagfederfußes zwei benachbarte Biegelinien (Bl₁ - Bl₄), die eine Biegezone definieren, den größten Abstand (d₁ - d₄) zueinander aufweisen.

10. Belagfeder nach einem der Ansprüche 4 bis 9, wobei die Belagfeder weiterhin einen Belagfederfuß (16) aufweist, mit dem die Belagfeder mit einer Kupplungsscheibe verbindbar ist, und im Bereich des Belagfederfußes zwei benachbarte Biegelinien (Bl₁ - Bl₄), die eine Biegezone definieren, den kleinsten Abstand (d₁ - d₄) zueinander aufweisen.

11. Belagfeder nach einem der vorhergehenden Ansprüche, wobei zumindest der erste und/oder der zweite Winkel (α, β, γ, δ) in einem Winkelbereich von etwa 1° bis etwa 50°, insbesondere in einem Bereich von etwa 3° bis etwa 30° liegt.

12. Belagfeder nach einem der vorhergehenden Ansprüche, wobei sich mindestens eine der Biegezonen (B₁ - B₄) über die ganze Belagfeder oder nur einen Teilbereich erstreckt.

13. Belagfeder nach einem der vorhergehenden Ansprüche, wobei mindestens ein Auflagebereich (A₁ -A_{4,} A_{z}) plan ausgeführt ist.

14. Belagfeder nach einem der vorhergehenden Ansprüche, wobei die Belagfeder weiterhin eine Belagfeder(mittel)linie (M) aufweist, wobei die Form der Belagfeder bezüglich der Belagfeder(mittel)linie symmetrisch oder asymmetrisch ausgebildet ist.

15. Belagfeder nach Anspruch 14, wobei die Biegezonen (B₁ - B₄) paarweise beidseits der Belagfeder(mittel)linie angeordnet sind.

16. Belagfeder nach Anspruch 14 oder 15, wobei die Biegezonen (B₁ - B₄) zueinander bezüglich der Belagfeder(mittel)linie achssymmetrisch ausgebildet sind.

17. Belagfeder nach Anspruch 14 oder 15, wobei die Biegezonen (B₁ - B₄) bezüglich der Belagfeder(mittel)linie asymmetrisch ausgebildet sind.

18. Kupplungsscheibe (1) für eine Reibungskupplung, insbesondere für eine Reibungskupplung eines Kraftfahrzeugs, mit mindestens einer Belagfeder (6) nach einem der vorhergehenden Ansprüche.

19. Kupplungsscheibe nach Anspruch 18, wobei die Reibungskupplung weiterhin Reibbeläge (10, 12) aufweist, die vorzugsweise ringscheibenförmig ausgebildet sind, und beidseits der Belagfedern (6) angeordnet sind, wobei sich mindestens eine der Biegezonen (B₁ - B₄) der Belagfeder (6) innerhalb der Reibbelagkontur befindet.

20. Kupplungsscheibe nach Anspruch 18 oder 19, wobei die Belagfeder (6) direkt oder indirekt von einem Nabenteil eines Torsionsdämpfers getragen sind.

21. Reibungskupplung für ein Kraftfahrzeug mit einer Kupplungsscheibe nach einem der Ansprüche 18 bis 20.

22. Belagfedereinheit bestehend aus mindestens zwei Belagfedern nach einem der Ansprüche 1-17 mit einem gemeinsamen Belagfederfuß (16)
